# EUROPÄISCHE PATENTANMELDUNG

(11) **EP 1 283 077 A1**
(43) Veröffentlichungstag der Anmeldung: **12.02.2003**
(21) Anmeldenummer: 02013873.1
(22) Anmeldetag: 22.06.2002
(51) Int. Cl.: B08B 17/00, A01N 25/10, C09D 5/14

(54) **Erhalt des Lotus-Effektes durch Verhinderung des Mikrobenwachstums auf selbstreinigenden Oberflächen**

(30) Priorität: 10.08.2001 DE 10139574
(71) Anmelder: Creavis Gesellschaft für Technologie und Innovation mbH, 45772 Marl (DE)
(72) Erfinder: Nun, Edwin Dr., 48727 Billerbeck (DE); Oles, Markus, Dr., 45525 Hattingen (DE)

(57) **Zusammenfassung**

Die vorliegende Erfindung betrifft selbstreinigende Oberflächen, die antimikrobielle Eigenschaften besitzen und Verfahren zu deren Herstellung.

Die wirtschaftliche Bedeutung von mit selbstreinigenden Oberflächen ausgestatteten Gegenständen nimmt immer mehr zu. Es ist deshalb Ziel der Weiterentwicklungen auf diesem Gebiet, auf einfache Weise selbstreinigende Oberflächen bereitzustellen, die .antimikrobielle Eigenschaften besitzen.

In der vorliegenden Erfindung wird dieses Ziel dadurch erreicht, dass an eine Beschichtung- bzw. an ein Lacksystemen zur Fixierung von Strukturbildnem zur Erzeugung selbstreinigenden Oberflächen antimikrobielle Polymere mit fixiert werden. Auf diese Weise sind die antimikrobiellen Polymeren dauerhaft an einer selbstreinigenden Oberfläche angebunden.

## Beschreibung

Die vorliegende Erfindung betrifft selbstreinigende Oberflächen, die unter der Verwendung von Partikelmischungen aus hydrophoben und antimikrobiellen Partikeln selbstreinigend und antimikrobiell ausgerüstet werden.

Gegenstände mit extrem schwer benetzbaren Oberflächen, sogenannte Lotus-Effekt-Oberflächen, weisen eine Reihe von wirtschaftlich bedeutsamen Merkmalen auf, insbesondere sind solche Oberflächen selbstreinigend. So ist die Reinigung von Oberflächen zeit- und kostenintensiv. Selbstreinigende Oberflächen sind somit von höchstem wirtschaftlichen Interesse. Haftmechanismen werden üblicherweise durch grenzflächenenergetische Parameter zwischen den beiden sich berührenden Oberflächen bedingt. In der Regel versuchen dabei die Systeme ihre freie Grenzflächenenergie zu erniedrigen. Liegen die freien Grenzflächenenergien zwischen zwei Komponenten an sich auch schon sehr niedrig, so kann allgemein davon ausgegangen werden, dass die Haftung zwischen diesen beiden Komponenten schwach ausgeprägt ist. Wichtig ist dabei die relative Erniedrigung der freien Grenzflächenenergie. Bei Paarungen mit einer hohen und einer niedrigen Grenzflächenenergie kommt es sehr auf die Möglichkeit der Wechselwirkungen an. So ist beispielsweise beim Aufbringen von Wasser auf eine hydrophobe Oberfläche es nicht möglich, eine merkliche Erniedrigung der Grenzflächenenergie herbeizuführen. Dies ist daran erkennbar, dass die Benetzung schlecht ist. Aufgebrachtes Wasser bildet Tropfen mit sehr großen Kontaktwinkeln. Perfluorierte Kohlenwasserstoffe, z. B. Polytetrafluorethlyen, haben eine sehr niedrige Grenzflächenenergie. Auf solchen Oberflächen haften kaum irgendwelche Komponenten, bzw. auf solchen Oberflächen abgelagerte Komponenten können sehr leicht wieder entfernt werden.

Der Einsatz von hydrophoben Materialien, wie perfluorierten Polymeren, zur Herstellung von hydrophoben Oberflächen ist bekannt. Eine Weiterentwicklung dieser Oberflächen besteht darin, die Oberflächen im µm-Bereich bis nm-Bereich zu strukturieren. US PS 5599489 offenbart ein Verfahren, bei dem eine Oberfläche durch Beschuss mit Partikeln einer entsprechenden Größe aufgeraut und durch anschließende Perfluorierung besonders abweisend ausgestattet werden kann. Ein anderes Verfahren beschreiben H. Saito et al in "Service Coatings International" 4, 1997, S. 168 ff. Hier werden Partikel aus Fluorpolymeren auf Metalloberflächen aufgebracht, wobei eine stark erniedrigte Benetzbarkeit der so erzeugten Oberflächen gegenüber Wasser mit einer erheblich reduzierten Vereisungsneigung festgestellt wurde.

In US-PS 3 354 022 und WO 96/04123 sind weitere Verfahren zur Erniedrigung der Benetzbarkeit von Gegenständen durch topologische Veränderungen der Oberflächen beschrieben. Hier werden künstliche Erhebungen bzw. Vertiefungen mit einer Höhe von ca. 5 bis 1 000 µm und einem Abstand von ca. 5 bis 500 µm auf hydrophobe oder nach der Strukturierung hydrophobierte Werkstoffe aufgebracht. Oberflächen dieser Art führen zu einer schnellen Tropfenbildung, wobei die abrollenden Tropfen Schmutzteilchen aufnehmen und somit die Oberfläche reinigen.

Dieses Prinzip ist der Natur entlehnt. Kleine Kontaktflächen erniedrigen die Van-der-Waal's-Wechselwirkung, die für die Haftung an ebenen Oberflächen mit niedriger Oberflächenenergie verantwortlich ist. Beispielsweise sind die Blätter der Lotus-Pflanze mit Erhebungen aus einem Wachs versehen, die die Kontaktfläche zu Wasser herabsetzen. WO 00/58410 beschreibt die Strukturen und beansprucht die Ausbildung selbiger durch Aufsprühen von hydrophoben Alkoholen, wie Nonakosan-10-ol, oder Alkandiolen, wie Nonakosan-5,10-diol. Nachteilig hieran ist die mangelhafte mechanische Stabilität der selbstreinigenden Oberflächen und Detergentien führen zur Ablösung der Struktur.

Eine weitere Methode, leicht reinigbare Oberflächen zu erzeugen, ist in DE 19917367 A1 beschrieben. Überzüge auf Basis fluorhaltiger Kondensate sind aber nicht selbstreinigend. Die Kontaktfläche zwischen Wasser und Oberfläche ist zwar reduziert, jedoch nicht in ausreichendem Maße.

EP 1 040 874 A2 beschreibt das Abprägen von Mikrostrukturen und beansprucht die Verwendung solcher Strukturen in der Analytik (Mikrofluidik). Nachteilig an diesen Strukturen ist die ungenügende mechanische Stabilität.

Trotz ausgezeichneter selbstreinigender Oberflächen ist die Besiedlung und Ausbreitung von Bakterien auf Oberflächen, z. B. von Rohrleitungen und Behältern oder Verpackungen möglich, ganz besonders dann, wenn die Topographie der selbstreinigenden Oberfläche ein Minimum aufweist. Wasseransammlungen ermöglichen hier die Besiedlung mit Mikroorganismen. Besiedlungen mit Mikroorganismen sind aber in hohem Maße unerwünscht, da sie die Selbstreinigung erschweren, wenn nicht gar vollständig zurückdrängen. Es bilden sich häufig Schleimschichten, die die Mikrobenpopulationen extrem ansteigen lassen, die z. B. Wasser-, Getränke- und Lebensmittelqualitäten nachträglich beeinträchtigen und sogar zum Verderb der Ware, sowie zur gesundheitlichen Schädigung der Verbraucher führen können.

Aus allen Lebensbereichen, in denen Hygiene von Bedeutung ist, sind Bakterien fernzuhalten. Davon betroffen sind Möbel und Geräteoberflächen ebenso wie Abtrennvorrichtungen zum Schutz der Intimsphäre sowie Wand- und Abgrenzungsflächen im sanitären Bereich.

Gegenwärtig werden Geräteoberflächen von Möbeln und Textilien gegen Bakterien im Bedarfsfall oder vorsorglich mit Chemikalien oder anderen Lösungen sowie Mischungen behandelt, die als Desinfektionsmittel mehr oder weniger breit und massiv antimikrobiell wirken. Solche chemischen Mittel wirken unspezifisch, sind häufig selbst toxisch oder reizend und können gesundheitlich bedenkliche Abbauprodukte bilden. Häufig zeigen sich auch Unverträglichkeiten bei entsprechend sensibilisierten Personen.

Trotz wasserabweisenden Oberflächen kommt es zuweil zu Algenbewuchs auf Außenflächen von Gebäuden, die mit solchen Kunststoffoberflächen ausgerüstet sind. Neben dem unerwünschten optischen Eindruck kann unter Umständen auch die Funktion entsprechender Bauteile vermindert werden. In diesem Zusammenhang ist z. B. an eine Veralgung von photovoltaisch funktionellen Flächen zu denken. Zudem geht der selbstreinigende Effekt mit zunehmendem Algenbewuchs verloren.

Eine weitere Form der mikrobiellen Verunreinigung, für die es bis heute ebenfalls keine technisch zufriedenstellende Lösung gibt, ist der Befall von Oberflächen durch Pilze. So stellt z. B. der Befall von Fugen und Wänden in Feuchträumen mit Aspergillus niger neben dem beeinträchtigten optischen Erscheinungsbild, auch einen ernstzunehmenden gesundheitsrelevanten Aspekt dar, da viele Menschen auf die von Pilzen abgegebenen Stoffe allergisch reagieren, was bis hin zu schweren chronischen Atemwegserkrankungen führen kann.

Aufgabe der vorliegenden Erfindung war es deshalb selbstreinigende Oberflächen und ein Verfahren zu deren Herstellung bereitzustellen, die nicht durch anhaftende Bakterien, Algen oder Pilze ihre selbstreinigende Wirkung verlieren.

Es wurde überraschenderweise gefunden, dass hydrophobe, selbstreinigende Oberflächen, die aus einem Trägermaterial und einem partikulären System bestehen, wobei das strukturbildende Material antimikrobielle Eigenschaften und hydrophobe Eigenschaften aufweist, deutlich langsamer von Bakterien, Algen oder Pilzen bewachsen werden, als herkömmliche selbstreinigende Oberflächen.

Gegenstand der vorliegenden Erfindung ist deshalb eine Oberfläche gemäß Anspruch 1, mit einer künstlichen Oberflächenstruktur aus Erhebungen und Vertiefungen, die selbstreinigende Eigenschaften aufweist, welche dadurch gekennzeichnet ist, dass die Oberflächenstruktur Materialien mit antimikrobiellen Eigenschaften aufweist.

Ebenfalls Gegenstand der vorliegenden Erfindung ist ein Verfahren gemäß Anspruch 8 zur Herstellung von Oberflächen gemäß zumindest einem der Ansprüche 1 bis 7, die selbstreinigende Eigenschaften aufweisen, welches dadurch gekennzeichnet ist, dass bei der Herstellung der Oberflächenstrukturen zumindest ein Material eingesetzt wird, welches antimikrobielle Eigenschaften aufweist.

Die erfindungsgemäßen Oberflächen haben den Vorteil, dass eine Anhaftung und Ausbreitung von biologischen Verschmutzungen, wie z. B. Bakterien, Pilzen und Algen deutlich verlangsamt wird und damit die selbstreinigenden Eigenschaften der Oberflächen länger wirksam erhalten bleiben.

Im folgenden soll unter den Begriffen antimikrobiell und mikrobizid ein und dieselbe Eigenschaft verstanden werden.

Aus der europäischen Patentanmeldung EP 0 862 858 ist bekannt, dass Copolymere von Tertiärbutylaminoethylmethacrylat, einen Methacrylsäureester mit sekundärer Aminofunktion, inhärent mikrobizide Eigenschaften besitzen. In den Beispielen wird dieses Copolymer Amina T 100 genannt.

Diese Polymeren weisen, ohne Zusatz eines mikrobiziden Wirkstoffes, sogenannte Kontaktmikrobizidität auf. Uns sind aus den folgenden Patentanmeldungen eine große Anzahl kontaktmikrobizider Polymere bekannt: DE 10024270, DE 10022406, PCT/EP 00/06501, DE 10014726, DE 10008177. Diese Polymere enthalten keine niedermolekularen Bestandteile. Die antimikrobiellen Eigenschaften sind auf den Kontakt von Bakterien mit der Oberfläche zurückzuführen.

Die erfindungsgemäße Oberfläche wird im folgenden beispielhaft beschrieben, ohne dass die Erfindung auf diese Beispiele beschränkt sein soll.

Die vorliegende Erfindung betrifft eine Oberfläche, die eine künstliche Oberflächenstruktur aus Erhebungen und Vertiefungen aufweist, die selbstreinigende Eigenschaften aufweist, wobei die Oberflächenstruktur dadurch gekennzeichnet ist, dass die Oberflächenstruktur zumindest ein Material mit antimikrobiellen Eigenschaften aufweist.

Als Materialien, die antimikrobielle Eigenschaften aufweisen, eignen sich insbesondere Homo- oder Copolymeren von Methacrylsäure-2-tert.-butylaminoethylester, Methacrylsäure-2-diethylaminoethylester, Methacrylsäure-2-diethylaminomethylester, Acrylsäure-2-tert.butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyioxyethyltrimethylammoniumchlorid, 3-Methacryloylaminopropyltrimethylammonium-chlorid, 2-Methacryloyloxyethyltrimethylammoniumchlorid, 2- Acryloyioxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether.

Zur Erzielung der selbstreinigenden Wirkung ist es vorteilhaft, wenn die hydrophoben Erhebungen der Oberflächenstruktur einen Abstand von 50 nm bis 200 µm, vorzugsweise von 500 nm bis 100 µm und ganz besonders bevorzugt von 0,1 bis 20 µm aufweisen. Ebenso vorteilhaft ist es, wenn die Erhebungen der Oberflächenstruktur eine Höhe von 50 nm bis 100 000 nm, vorzugsweise von 50 bis 50 000 nm und ganz besonders bevorzugt von 100 bis 30 000 nm aufweisen.

In einer besonders bevorzugten Ausführungsform der erfindungsgemäßen Oberfläche werden die Erhebungen und Vertiefungen dadurch gebildet, dass die Oberfläche auf ihr aufgebrachte Partikel aufweist. Die Partikel sind vorzugsweise mittels eines Trägersystems auf der Oberfläche fixiert. Die Partikel können eine Mischung von hydrophoben Partikeln und Partikeln mit antimikrobiellen Eigenschaften sein. Ganz besonders bevorzugt weist die Oberfläche eine Mischung von hydrophoben Partikeln und Partikeln mit antimikrobiellen Eigenschaften auf, die einen Gehalt an Partikeln mit antimikrobiellen Eigenschaften von 0,01 bis 25 Gew.-%, vorzugsweise von 0,1 bis 20 Gew.-% und ganz besonders bevorzugt von 1 bis 15 Gew.-%, bezogen auf die Partikelmischung aufweist.

Vorzugsweise werden hydrophobe- oder hydrophobierte Partikel eingesetzt, die einen Partikeldurchmesser von 0,02 bis 100 µm, besonders bevorzugt von 0,2 bis 50 µm und ganz besonders bevorzugt von 0,3 bis 30 µm aufweisen. Die erfindungsgemäßen Oberflächenstrukturen weisen die einzelnen Partikel auf der Oberfläche in Abständen von 0 - 10 Partikeldurchmesser, insbesondere von 0 - 3 Partikeldurchmesser, auf. Die antimikrobiellen, hydrophilen Partikel können vorzugsweise Partikeldurchmesser von 1 bis 3000 µm, bevorzugt 20 bis 2000 µm, und ganz besonders bevorzugt von 50 bis 500 µm aufweisen.

Die Partikel können auch als Aggregate oder Agglomerate vorliegen, wobei gemäß DIN 53 206 unter Aggregaten flächig oder kantenförmig aneinander gelagerte Primärteilchen (Partikel) und unter Agglomeraten punktförmig aneinander gelagerte Primärteilchen (Partikel) verstanden werden. Als Partikel können auch solche eingesetzt werden, die sich aus Primärteilchen zu Agglomeraten oder Aggregaten mit einer Größe von 0,2 - 100 µm zusammenlagern.

Es kann vorteilhaft sein, wenn die eingesetzten hydrophoben- oder hydrophobierten Partikel eine strukturierte Oberfläche haben. Vorzugsweise werden diese Partikel, die eine unregelmäßige Feinstruktur im Nanometerbereich auf der Oberfläche aufweisen, eingesetzt. Die Feinstruktur der Partikel ist vorzugsweise eine zerklüftete Struktur mit Erhebungen und/oder Vertiefungen im Nanometerbereich. Vorzugsweise weisen die Erhöhungen im Mittel eine Höhe von 20 bis 500 nm, besonders bevorzugt von 50 bis 200 nm auf. Der Abstand der Erhöhungen bzw. Vertiefungen auf den Partikeln beträgt vorzugsweise weniger als 500 nm, ganz besonders bevorzugt weniger als 200 nm. Diese Vertiefungen, wie z. B. Krater, rissartige Einkerbungen, Kerben, Spalten, Löcher und Kavitäten unterstützen die wirksame Struktur der Partikel.

Als hydrophobe Partikel können Partikel eingesetzt werden, die zumindest ein Material, ausgewählt aus Silikaten, dotierten oder pyrogenen Silikaten, Mineralien, Metalloxiden, Kieselsäuren. Metallen oder Polymeren aufweisen. Als Partikel, insbesondere als hydrophobe Partikel, die eine unregelmäßige Feinstruktur im Nanometerbereich an der Oberfläche aufweisen, werden vorzugsweise solche Partikel eingesetzt, die zumindest eine Verbindung, ausgewählt aus pyrogener Kieselsäure, Aluminiumoxid, Siliziumoxid, Mischoxide, pyrogenen Silikaten oder pulverförmige Polymeren oder pulverförmige Metallen aufweisen. Es kann vorteilhaft sein, wenn die erfindungsgemäße Oberfläche Partikel aufweist, die hydrophobe Eigenschaften aufweisen. Die hydrophoben Eigenschaften der Partikel können durch das verwendete Material der Partikel inhärent vorhanden sein. Es können aber auch hydrophobierte Partikel eingesetzt werden, die z. B. durch eine Behandlung mit zumindest einer Verbindung aus der Gruppe der Alkylsilane, Perfluoralkylsilane, Paraffine, Wachse, Fettsäureestern, funktionalisierte langkettige Alkanderivate oder Alkyldisilazane, hydrophobe Eigenschaften aufweisen.

Als Partikel mit antimikrobiellen Eigenschaften, die in der Regel hydrophile Eigenschaften aufweisen, werden vorzugsweise solche eingesetzt, die Homo- oder Copolymere ausgewählt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammoniumchlorid, 2-Methacryloyloxyethyltrimethylammoniumchlorid, 2- Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether aufweisen.

Die erfindungsgemäße Oberfläche kann zumindest eine Fläche eines Formkörpers aus einem Material, ausgewählt aus den Polymeren, wie z. B. Polyamiden, Polyurethanen, Polyetherblockamiden, Polyesteramiden, Polyvinylchlorid, Polyolefinen, Polysilikonen, Polysiloxanen, Polymethylmethacrylaten oder Polyterephthalaten sowie Metallen, Hölzern, Leder, Fasern, Geweben, Gläsern oder Keramiken sein. Die Auflistung der polymeren Materialien ist nur beispielhaft und beschränkt sich nicht nur auf die gelisteten. Handelt es sich bei dem Formkörper um einen Formkörper aus Polymerem so kann es vorteilhaft sein, wenn dieser Formkörper, und damit die Oberfläche, ein Polymer mit antimikrobiellen Eigenschaften aufweist.

Die erfindungsgemäßen Oberflächen werden vorzugsweise mit einem erfindungsgemäßen Verfahren zur Herstellung von Oberflächen mit einer künstlichen Oberflächenstruktur, die selbstreinigende Eigenschaften aufweisen, hergestellt, welches dadurch gekennzeichnet ist, dass bei der Herstellung der Oberflächenstrukturen zumindest ein Material eingesetzt wird, welches antimikrobielle Eigenschaften aufweist.

Die Oberflächenstruktur, die Erhebungen oder Vertiefungen aufweist, kann auf der Oberfläche selbst erzeugt werden. Dies kann z. B. dadurch erfolgen, dass durch Aufbringen und Fixieren von Partikeln auf der Oberfläche die Oberflächenstruktur erzeugt wird. Das Aufbringen und das Fixieren der Partikel auf der Oberfläche kann auf eine dem Fachmann bekannte Art und Weise erfolgen. Als chemische Methode der Fixierung kann z. B. die Verwendung eines Trägersystems eingesetzt werden. Als Trägersystem kommen verschiedene Klebstoffe, Haftvermittler oder Lacke in Frage. Dem Fachmann ergeben sich weitere Trägersysteme oder chemische Fixiermethoden.

Das Material, welches antimikrobielle Eigenschaften aufweist kann sowohl in der Oberfläche, als auch im Trägersystem oder im Partikelsystem vorhanden sein. Vorzugsweise weist zumindest ein Teil der eingesetzten Partikel ein Material, welches antimikrobielle Eigenschaften aufweist, auf. Bevorzugt wird als antimikrobielles Material ein Homo- oder Copolymer hergestellt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3 -dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammoniumchlorid, 2-Methacryloyloxyethyltrimethylammoniumchlorid, 2- Acryloyioxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether eingesetzt.

Ganz besonders bevorzugt wird eine Partikelmischung auf die Oberfläche aufgebracht, die Partikel mit antimikrobiellen Eigenschaften aufweist. Es kann vorteilhaft sein, wenn die Partikelmischung eine Mischung von strukturbildenden Partikeln und Partikeln mit antimikrobiellen Eigenschaften aufweist, die einen Gehalt an Partikeln mit antimikrobiellen Eigenschaften von 0,01 bis 25 Gew.-%, vorzugsweise von 0,1 bis 20 Gew.-% und ganz besonders bevorzugt von 1 bis 15 Gew.-%, bezogen auf die Partikelmischung aufweist. Die Partikel mit antimikrobiellen Eigenschaften können selbstverständlich ebenfalls zur Strukturbildung beitragen. Die Partikelmischung muß so abgestimmt werden, dass die antimikrobielle Wirkung erzeugt wird, aber die für die Selbstreinigung notwendige Hydrophobie noch dominiert.

Das Aufbringen der Partikelmischung auf die Oberfläche zur Erzeugung der Oberflächenstruktur und der antimikrobiellen Eigenschaften kann z. B. so durchgeführt werden, dass das Trägersystem, welches eine härtbare Substanz sein kann, durch Aufsprühen, Aufrakeln, Aufstreichen oder Aufspritzen auf eine Oberfläche aufgebracht wird. Vorzugsweise wird die härtbare Substanz in einer Dicke von 1 bis 200 µm, vorzugsweise in einer Dicke von 5 bis 75 µm aufgebracht. Je nach Viskosität der härtbaren Substanz kann es vorteilhaft sein, die Substanz vor einem Aufbringen der Partikel anhärten zu lassen. Idealerweise wird die Viskosität der härtbaren Substanz so gewählt, dass die aufgebrachten Partikel zumindest teilweise in die härtbare Substanz einsinken können, die härtbare Substanz bzw. die auf ihr aufgebrachten Partikel aber nicht mehr verlaufen, wenn die Oberfläche senkrecht gestellt wird.

Das Aufbringen der Partikel selbst kann z. B. durch Aufsprühen erfolgen. Insbesondere kann das Aufbringen der Partikel durch Aufsprühen unter Verwendung einer elektrostatischen Sprühpistole erfolgen. Nach dem Aufbringen der Partikel können überschüssige Partikel, also Partikel die nicht an der härtbaren Substanz haften, durch Schütteln, Abbürsten oder Abblasen von der Oberfläche entfernt werden. Diese Partikel können gesammelt und wiedereingesetzt werden.

Bei dieser Ausführungsart des erfindungsgemäßen Verfahren erfolgt das Fixieren der Partikel auf der Oberfläche durch Härten des Trägersystems, wobei dieses vorzugsweise durch thermische Energie und/oder Lichtenergie erfolgt. Besonders bevorzugt erfolgt das Härten des Trägersystems durch Lichtenergie. Vorzugsweise erfolgt das Härten des Trägers unter einer Inertgas-Atmosphäre, ganz besonders bevorzugt unter einer Stickstoffatmosphäre.

Als Trägersysteme können insbesondere UV-härtbare, thermisch härtbare oder an der Luft härtende Coatingsysteme dienen. Unter Coatingsysteme fallen lackartige Mischungen aus einfach ungesättigten Acrylaten oder Methacrylaten mit mehrfach ungesättigten Acrylaten oder Methacrylaten, aber auch Mischungen der mehrfach ungesättigten Acrylate bzw. Methacrylate untereinander. Lacksysteme auf Urethanbasis gelten ebenfalls als Coatingsysteme. Die Mischungsverhältnisse können in weiten Grenzen variiert werden. Abhängig von der später zuzugebenden strukturbildenden Komponente, können weitere funktionelle Gruppen wie Hydroxygruppen, Ethoxygruppen, Amine, Ketone, Isocyanate oder ähnliche, aber auch fluorhaltige Monomere oder inerte Füllkomponenten, wie in Monomermischung lösliche Polymere, zugegeben werden. Die zusätzliche Funktionalität dient hauptsächlich der besseren Anbindung der Strukturbildner. Ferner können als Trägersysteme Reinacrylatdispersionen und Pulverlacksysteme verwandt werden. Es kann vorteilhaft sein, wenn das Trägersystem ebenfalls ein Material, welches antimikrobielle Eigenschaften aufweist, aufweist.

Als strukturgebende Partikel können hydrophobe- oder hydrophobierte Partikel eingesetzt werden, die zumindest ein Material, ausgewählt aus Silikaten, dotierten oder pyrogenen Silikaten, Mineralien, Metalloxiden, Kieselsäuren. Metallen oder Polymeren aufweisen. Besonders bevorzugt werden Partikel mit eingesetzt, die einen Partikeldurchmesser von 0,02 bis 100 µm, besonders bevorzugt von 0,1 bis 50 µm und ganz besonders bevorzugt von 0,3 bis 30 µm aufweisen.

Vorzugsweise weisen die Partikel zur Generierung der selbstreinigenden Oberflächen hydrophobe Eigenschaften auf. Die Partikel können selbst hydrophob sein, wie z. B. PTFE aufweisende Partikel, oder die eingesetzten Partikel können hydrophobiert worden sein. Das Hydrophobieren der Partikel kann auf eine dem Fachmann bekannte Weise, z. B. durch eine Behandlung mit zumindest einer Verbindung aus der Gruppe der Alkylsilane, Perfluoralkylsilane, Paraffine, Wachse, Fettsäureestern, funktionalisierte langkettige Alkanderivate oder Alkyldisilazane, erfolgen. Typische hydrophobierte Partikel sind z. B. Feinstpulver wie Aerosil R 974 oder Aerosil-R 8200 (Degussa AG), die käuflich zu erwerben sind.

Vorzugsweise werden solche hydrophoben Partikel, die zumindest ein Material, ausgewählt aus Silikaten oder dotierten Silikaten, Mineralien, Metalloxiden, Metallmischoxiden, pyrogenen Kieselsäuren oder Fällungskieselsäuren oder Polymeren aufweisen, eingesetzt. Ganz besonders bevorzugt weisen die Partikel Silikate, pyrogene Kieselsäuren oder Fällungskieselsäuren, insbesondere Aerosile, Mineralien, wie Magadiit Al₂O₃, SiO₂, TiO₂, ZrO₂ und mit Aerosil R 974 ummanteltes Zn-Pulver oder pulverförmige Polymere, wie z. B. kryogen gemahlenes oder sprühgetrocknet Polytetrafluorethylen (PTFE), auf.

Besonders bevorzugt werden hydrophobe Partikel mit einer BET-Oberfläche von 50 bis 600 m²/g eingesetzt. Ganz besonders bevorzugt werden Partikel eingesetzt, die eine BET-Oberfläche von 50 bis 200 m²/g aufweisen.

Als Partikel mit antimikrobiellen Eigenschaften können Partikel eingesetzt werden, die Homopolymere oder Copolymere, hergestellt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammoniumchlorid, 2-Methacryloyloxyethyltrimethylammoniumchlorid, 2-Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether aufweisen. Die Partikel können ganz aus dem antimikrobielle Eigenschaften aufweisenden Material bestehen oder das antimikrobielle Material als Beschichtung aufweisen. Besonders bevorzugt werden Partikel mit antimikrobiellen Eigenschaften eingesetzt, die einen Partikeldurchmesser von 1 bis 3000 µm, besonders bevorzugt von 20 bis 2000 µm und ganz besonders bevorzugt von 50 bis 500 µm aufweisen.

Die antimikrobiell wirkenden Partikel dürfen nicht hydrophobiert werden, da durch eine Belegung der Oberfläche mit einem Hydrophobierungsreagenz die antimikrobielle Eigenschaft verloren geht.

Die Partikel können auch als Aggregate oder Agglomerate vorliegen, wobei gemäß DIN 53 206 unter Aggregaten flächig oder kantenförmig aneinander gelagerte Primärteilchen (Partikel) und unter Agglomeraten punktförmig aneinander gelagerte Primärteilchen (Partikel) verstanden werden. Als Partikel können auch solche eingesetzt werden, die sich aus Primärteilchen zu Agglomeraten oder Aggregaten mit einer Größe von 0,2 - 100 µm zusammenlagern.

Es kann vorteilhaft sein, wenn die eingesetzten Partikel eine strukturierte Oberfläche haben. Vorzugsweise werden Partikel, die eine unregelmäßige Feinstruktur im Nanometerbereich auf der Oberfläche aufweisen, eingesetzt. Die Feinstruktur der Partikel ist vorzugsweise eine zerklüftete Struktur mit Erhebungen und/oder Vertiefungen im Nanometerbereich. Vorzugsweise weisen die Erhöhungen im Mittel eine Höhe von 20 bis 500 nm, besonders bevorzugt von 50 bis 200 nm auf. Der Abstand der Erhöhungen bzw. Vertiefungen auf den Partikeln beträgt vorzugsweise weniger als 500 nm, ganz besonders bevorzugt weniger als 200 nm. Vertiefungen, wie z. B. Krater, rissartige Einkerbungen, Kerben, Spalten, Löcher und Kavitäten unterstützen die wirksame Struktur der Partikel.

Das erfindungsgemäße Verfahren kann hervorragend zur Herstellung von selbstreinigenden Oberflächen auf planaren oder nichtplanaren Gegenständen, insbesondere auf nichtplanaren Gegenständen verwendet werden, die nach Beschädigung selbiger antimikrobielle Eigenschaften aufweisen. Dies ist mit den herkömmlichen Verfahren nur eingeschränkt möglich. Insbesondere über Verfahren, bei denen vorgefertigte Filme auf eine Oberfläche aufgebracht werden, sind nichtplanare Gegenstände, wie z. B. Skulpturen, nicht oder nur eingeschränkt zugänglich. Naturgemäße kann das erfindungsgemäße Verfahren aber auch zur Herstellung von selbstreinigenden Oberflächen auf Gegenständen mit planaren Oberflächen, wie z. B. Gewächshäusern oder öffentlichen Verkehrsmitteln verwendet werden. Insbesondere die Anwendung des erfindungsgemäßen Verfahrens zur Herstellung von selbstreinigenden Oberflächen an Gewächshäusern weist Vorteile auf, da mit dem Verfahren selbstreinigende Oberflächen z. B. auch auf transparenten Materialien wie Glas oder Plexiglas® hergestellt werden können und die selbstreinigende Oberfläche zumindest soweit transparent ausgebildet werden kann, dass für das Wachstum der Pflanzen im Gewächshaus genügend Sonnenlicht durch die mit einer selbstreinigenden Oberfläche ausgerüstete transparente Oberfläche dringen kann. Im Gegensatz zu herkömmlichen Gewächshäusern, die regelmäßig unter anderem von Laub-, Staub-, Kalk- und biologischem Material, wie z. B. Algen, gereinigt werden müssen, können Gewächshäuser, die eine erfindungsgemäße Oberfläche gemäß einem der Ansprüche 1 bis 8, aufweisen, mit längeren Reinigungsintervallen betrieben werden.

Gegenstand der vorliegenden Erfindung ist außerdem die Verwendung der erfindungsgemäß hergestellten selbstreinigenden Oberflächen, die antimikrobiell wirksam sind. Solche Erzeugnisse basieren vorzugsweise auf Polymeren, wie z. B. Polyamiden, Polyurethanen, Polyetherblockamiden, Polyesteramiden, Polyvinylchlorid, Polyolefinen, Polysilikonen, Polysiloxanen, Polymethylmethacrylaten oder Polyterephthalaten sowie Metallen, Hölzern, Leder, Fasern, Geweben, Gläsern und Keramiken, die mit erfindungsgemäßen Verbindungen bzw. Polymerformulierungen und Strukturbildner beschichtete Oberflächen aufweisen. Die Auflistung der polymeren Werkstoffe ist nur beispielhaft und beschränkt sich nicht nur auf die genannten.

Antimikrobiell wirksame Selbstreinigungsschichten aufweisende Erzeugnisse dieser Art sind beispielsweise und insbesondere Bauteile von Klimaanlagen, beschichtete Rohre, Halbzeuge, Bedachungen, Badezimmer und Toilettenartikel, Küchenartikel, Komponenten von Sanitäreinrichtungen, Komponenten von Tierkäfigen und Behausungen sowie Materialien des sogenannten textilen Bauens.

Die selbstreinigenden Beschichtungen mit antimikrobiellen Eigenschaften können überall verwendet werden, wo es auf möglichst bakterienfreie, algen- und/oder pilzfreie, d. h.. mikrobizide Oberflächen und Oberflächen mit Antihafleigenschaften, ankommt. Verwendungsbeispiele für die erfindungsgemäßen Oberflächen finden sich in folgenden Bereichen:
- Marine:: Hafenanlagen, Bojen, Bohrplattformen
- Haus:: Bedachungen, Wände, Fassaden, Gewächshäuser, Sonnenschutz, Gartenzäune, Holzschutz, Markisen, Textiles Bauen
- Sanitär:: Öffentliche Sanitäreinrichtungen wie z. B. Toiletten, Badezimmer, Duschvorhänge, Toilettenartikel, Sauna, Schwimmbad, Krankenhauseinrichtungen, Einrichtungen von Arztpraxen und von physiotherapeutischen Behandlungszentren
- Lebensmittel:: Küche, Küchenartikel
- Maschinenteile:: Bioreaktoren, Solaranlagen, Photovoltaik-Anlagen
- Gebrauchsgegenstände:: öffentliche Verkehrsmittel, LKW-Planen, Tierkäfige

In den Abbildungen Fig. 1 bis Fig. 3 sind graphisch die Versuchsergebnisse aus den Beispielen 1 und 2 sowie des Vergleichsbeispiels wiedergegeben. Dabei bedeuten WSH: Wasser standardisierter Härte und 2 x 2 bezeichnet die Probekörpergröße in cm.

Fig. 1 zeigt die Versuchsergebnisse des Vergleichsbeispiels. Es ist gut zu erkennen, dass keinerlei das Mikrobenwachstum negativ beeinflussende Faktoren zugegen sind.

Fig. 2 zeigt die Versuchsergebnisse des Beispiels 1. Es ist gut zu erkennen, dass selbst 1 % antimikrobielle Pulverzumischung zum Partikelgemisch antimikrobielles Verhalten bewirkt.

Fig. 3 zeigt die Versuchsergebnisse des Beispiels 2. Es ist gut zu erkennen, dass 10 % Amina T100 eine weitere Verbesserung der keimreduzierenden Eigenschaften hervorbringen.

Die nachfolgenden Beispiele sollen die erfindungsgemäßen Oberflächen näher erläutern, ohne dass die Erfindung auf diese Ausführungsarten beschränkt sein soll.

### Vergleichsbeispiel

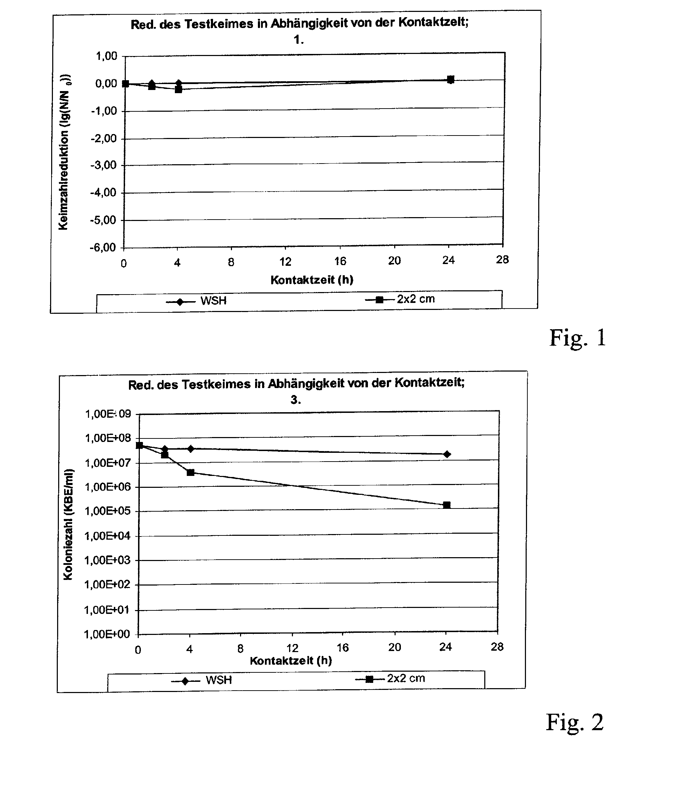

20 % Methylmethacrylat, 20 % Pentaerithrittetraacrylat und 60 % Hexandioldimethacrylat werden miteinander gemischt. Bezogen auf diese Mischung werden 14 Plex 4092 F (Röhm) und 2 % Darocur 1173 (UV-Härter) zugesetzt und mindestens 60 min. gerührt. Diese Mischung wird auf eine 2 mm dicke PMMA-Platte 50 µm dick aufgezogen und die Schicht 5 min. antrocknen lassen. Anschließend wird eine Kieselsäure (Aerosil R8200, Degussa AG) aufgestreut und 3 min. später mit einer Wellenlänge von 308 nm unter Stickstoff gehärtet. Überschüssiges Aerosil R8200 wird abgebürstet. Die Charakterisierung der Oberflächen visuell und ist mit +++ protokolliert, das bedeutet, Wassertropfen bilden sich nahezu vollständig aus und der Abrollwinkel ist unterhalb von 10 °. Die Beurteilung der mikrobiziden Wirksamkeit gegen den Testkeim Staphylococcus aureus bei 30° C in Wasser standardisierter Härte ergab, dass eine Keimzahlreduzierung nicht vorhanden ist, wobei in Fig. 1 N der gezählten Keimzahl pro Volumeneinheit und N° der Keimzahl bestimmt in Wasser standardisierter Härte zu der entsprechenden Zeit entspricht.

### Beispiel 1

20 % Methylmethacrylat, 20 % Pentaerithrittetraacrylat und 60 % Hexandioldimethacrylat werden miteinander gemischt. Bezogen auf diese Mischung werden 2 % Darocur 1173 (UV-Härter) und 14 % Amina T100, zugemischt. Die Mischung wird mindestens 60 min. lang gerührt, aufgezogen auf eine 2 mm PMMA-Platte zu 50 µm Dicke und 5 min. antrocknen lassen. Anschließend wird eine Mischung aus 99 % Aerosil R8200 mit 1% Amina T100 elektrostatisch aufgebracht und 3 min. später bei einer Wellenlänge von 308 nm unter Stickstoff gehärtet. Überschüssiges Partikelgemisch wird abgebürstet. Die Charakterisierung der Oberfläche erfolgt visuell und ist mit +++ protokolliert, das bedeutet, Wassertropfen bilden sich nahezu vollständig aus und der Abrollwinkel ist unterhalb von 10 °. Die Beurteilung der mikrobiziden Wirksamkeit gegen den Testkeim Staphylococcus aureus bei 30 °C in Wasser standardisierter Härte wird mit 2,08 log-Stufen angegeben. Diese ergibt sich aus Subtraktion der im Diagramm angegebenen logarithmierten KBE-Werte (**K**olonie**B**ildende **E**inheiten)

### Beispiel 2

Analog Beispiel 1 werden die Monomeren gemischt und die Beschichtung durchgeführt. Die Partikel wurden aus 90 % Aerosil R8200 mit 10 % Amina T100 gemischt und elektrostatisch aufgetragen. Die Charakterisierung der Oberflächen erfolgte Visuell und ist mit +++ protokolliert. Die Beurteilung der mikrobiziden Wirksamkeit gegen den Testkeim Staphylococcus aureus bei 30 °C in Wasser standardisierter Härte wird mit 3,47 log-Stufen angegeben. Diese ergibt sich aus Subtraktion der im Diagramm angegebenen logarithmierten KBE-Werte (**K**olonie**B**ildende **E**inheiten)

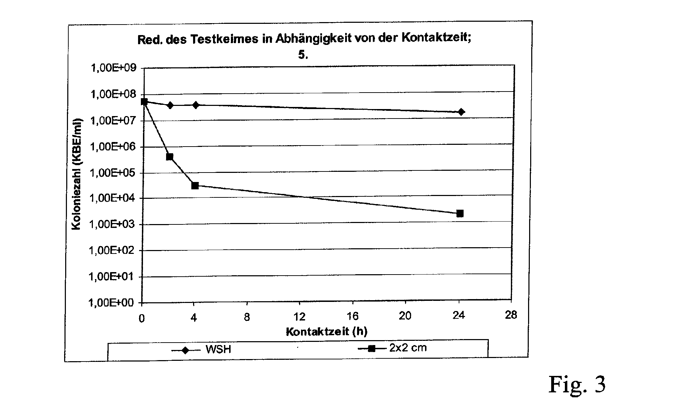

Die in den Figuren Fig. 2 bis 3 gezeigten Diagramme zur Untersuchung der antimikrobiellen Wirkung von selbstreinigenden Oberflächen zeigt, dass eine deutliche Reduktion der keimbildenden Einheiten auf den erfindungsgemäß hergestellten Oberflächen gemäß den Beispielen 1 und 2 festzustellen ist. Eine selbstreinigende Oberfläche gemäß Vergleichsbeispiel, die keine antimikrobiellen Eigenschaften aufweist, zeigt keine Reduktion der Keimzahlen im Vergleich zum Vergleichsmedium (Fig. 1).

## Patentansprüche

1. Oberfläche mit einer künstlichen Oberflächenstruktur aus Erhebungen und Vertiefungen, die selbstreinigende Eigenschaften aufweist,
**dadurch gekennzeichnet,**
**dass** die Oberflächenstruktur Materialien mit antimikrobiellen Eigenschaften aufweist.

2. Oberfläche gemäß Anspruch 1,
**dadurch gekennzeichnet,**
**dass** die Oberfläche Partikel aufweist.

3. Oberfläche gemäß Anspruch 2,
**dadurch gekennzeichnet,**
**dass** die Oberfläche Partikel aufweist, die mittels eines Trägersystems auf der Oberfläche fixiert sind.

4. Oberfläche nach zumindest einem der Ansprüche 2 oder 3,
**dadurch gekennzeichnet,**
**dass** die Partikel aus einer Mischung von hydrophoben Partikeln und Partikeln mit antimikrobiellen Eigenschaften besteht.

5. Oberfläche nach zumindest einem der Ansprüche 1 bis 4,
**dadurch gekennzeichnet,**
**dass** das Material mit antimikrobiellen Eigenschaften zumindest ein antimikrobielles Polymer aufweist, welches aus zumindest einem Monomeren ausgewählt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxy-ethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether hergestellt wurde.

6. Oberfläche nach Anspruch 4,
**dadurch gekennzeichnet,**
**dass** die Mischung der Partikel einen Gehalt an Partikeln mit antimikrobiellen Eigenschaften von 0,01 bis 25 Gew.-%, bezogen auf die Partikelmischung aufweist.

7. Oberfläche nach zumindest einem der Ansprüche 1 bis 6,
**dadurch gekennzeichnet,**
**dass** die Oberfläche zumindest eine Fläche eines Formkörpers aus einem Material, ausgewählt aus Polymeren, wie z. B. den Polyamiden, Polyurethanen, Polyetherblockamiden, Polyesteramiden, Polyvinylchlorid, Polyolefinen, Polysilikonen, Polysiloxanen, Polymethylmethacrylaten oder Polyterephthalaten sowie Metallen, Hölzern, Leder, Fasern, Geweben, Gläsern oder Keramiken ist.

8. Verfahren zur Herstellung von Oberflächen mit einer künstlichen Oberflächenstruktur gemäß zumindest einem der Ansprüche 1 bis 7, die selbstreinigende Eigenschaften aufweisen,
**dadurch gekennzeichnet,**
**dass** bei der Herstellung der Oberflächenstrukturen zumindest ein Material eingesetzt wird, welches antimikrobielle Eigenschaften aufweist.

9. Verfahren nach Anspruch 8,
**dadurch gekennzeichnet,**
**dass** eine Oberflächenstruktur, die Erhebungen oder Vertiefungen aufweist, auf der Oberfläche selbst hergestellt wird.

10. Verfahren gemäß Anspruch 8,
**dadurch gekennzeichnet,**
**dass** die Oberflächenstruktur durch Aufbringen und Fixieren von Partikeln auf der Oberfläche erzeugt wird.

11. Verfahren gemäß Anspruch 10,
**dadurch gekennzeichnet,**
**dass** zum Fixieren ein Trägersystem eingesetzt wird.

12. Verfahren gemäß zumindest einem der Ansprüche 8 bis 11,
**dadurch gekennzeichnet,**
**dass** die Oberfläche, die Partikel und/oder das Trägersystem das antimikrobielle Material aufweist.

13. Verfahren nach Anspruch 12,
**dadurch gekennzeichnet,**
**dass** als antimikrobielles Material ein Polymer eingesetzt wird, welches aus zumindest einem Monomeren ausgewählt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzoyldimethylammoniumbromid, 2-Methacryloyloxyethyl-4-benzoyldimethylammoniumbromid, 2-Acrylamido-2-methyl-1-propansulfonsäure, 2-Diethylaminoethylvinylether oder 3-Aminopropylvinylether hergestellt wurde.

14. Verfahren gemäß Anspruch 12 oder 13,
**dadurch gekennzeichnet,**
**dass** als Partikel eine Mischung aus Partikeln, die zumindest ein Material, ausgewählt aus Silikaten, dotierten Silikaten, Mineralien, Metalloxiden, Kieselsäuren oder Polymeren aufweisen, mit Homo- oder Copolymerpartikeln ausgewählt aus Methacrylsäure-2-tert.butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyioxyethyltrimethylammoniumchlorid, 2- Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether aufweisen.

15. Verfahren gemäß zumindest einem der Ansprüche 8 bis 14,
**dadurch gekennzeichnet,**
**dass** die hydrophoben Partikel einen mittleren Partikeldurchmesser von 0,05 bis 30 µm aufweisen.

16. Verfahren gemäß zumindest einem der Ansprüche 8 bis 14,
**dadurch gekennzeichnet,**
**dass** die Partikel mit antimikrobiellen Eigenschaften einen Durchmesser von 20 bis 2000 µm aufweisen.

17. Verfahren gemäß zumindest einem der Ansprüche 8 bis 15,
**dadurch gekennzeichnet,**
**dass** die Partikel eine unregelmäßige Feinstruktur im Nanometerbereich auf der Oberfläche aufweisen.

18. Verwendung von Oberflächen gemäß zumindest einem der Ansprüche 1 bis 7 zur Ausrüstung von Oberflächen bei Hafenanlagen, Bojen, Bohrplattformen, Bedachungen, Wänden, Fassaden, Gewächshäusern, Sonnenschutz, Gartenzäunen, Holzschutz, Markisen, textilem Bauen, öffentlichen Sanitäreinrichtungen, Badezimmern, Duschvorhängen, Toilettenartikeln, Saunen, Schwimmbädern, Krankenhauseinrichtungen, Einrichtungen von Arztpraxen und von physiotherapeutischen Behandlungszentren, Küchen, Küchenartikeln, Bioreaktoren, Solaranlagen, Photovoltaik-Anlagen, öffentlichen Verkehrsmitteln, LKW-Planen oder Tierkäfigen.
